# EUROPEAN PATENT SPECIFICATION

(11) **EP 2 377 788 B1**
(45) Date of publication and mention of the grant of the patent: **11.03.2020**
(21) Application number: 11250444.4
(22) Date of filing: 08.04.2011
(51) Int. Cl.: B65G 37/00, F04B 19/24, F04D 33/00, F04B 19/20

(54) **Multiple moving wall dry coal extrusion pump**
Trockenkohleextrusionspumpe mit mehrfachen beweglichen Wänden
Pompe à extrusion de charbon sec à plusieurs parois mobiles

(30) Priority: 13.04.2010 US 758859
(43) Date of publication of application: 19.10.2011
(73) Proprietor: Gas Technology Institute, 1700 S Mount Prospect Road Des Plaines, IL 60018 (US)
(72) Inventor: Fitzsimmons, Mark Andrew, Canoga Park California 91309 (US)
(74) Representative: Dehns

(56) References cited:
- CA-A1- 1 220 753
- GB-A- 1 502 524
- GB-A- 2 258 442
- US-A- 2 836 285
- US-A- 4 159 886
- US-A- 4 585 118
- US-A- 6 113 335
- US-B2- 7 387 197

## Description

The present disclosure relates to a dry coal extrusion pump for coal gasification, and more particularly to a multiple moving wall arrangement therefor.

The coal gasification process involves conversion of coal or other carbon-containing solids into synthesis gas. While both dry coal and water slurry are used in the gasification process, dry coal pumping may be more thermally efficient than current water slurry technology. In order to streamline the process and increase the mechanical efficiency of dry coal gasification, the use of dry coal extrusion pumps has steadily become more common in dry coal gasification. Some currently available dry coal extrusion pumps suffer from internal shear failure zones and flow stagnation problems. The presence of failure zones may lead to decreased mechanical efficiency.

CA 1220753 discloses a conveyance apparatus comprising a conveyor belt and a cover belt between which material is held and transported.

US 4159886 discloses a coal conveyor comprising two endless conveyor belts which mesh together in order to transport coal to a higher pressure zone.

GB 1502524 discloses a bulk material handling apparatus for conveying material from one level to another level by means of two endless belts.

US 4585118 discloses a self-tracking roller comprising a central space and two belts, the central space allowing the belts to form a sandwich for conveying solid material therein.

GB 2258442 discloses a conveying means comprising two belts, the belts arranged to take discharge material to a higher level.

US 6113335 discloses an unloader with a vertically conveying section comprising two belts between which bulk cargo is transported.

US 2836285 discloses a belt conveyor in which a pair of trough-shaped belts are located opposite each other and hold the material being conveyed therebetween. Each belt has two side wall portions, the side wall portion of the top belt releasably interlocks with the corresponding side wall portion of the bottom belt.

The present invention according to claim 1 provides a particulate material pump comprising: a passageway between an inlet and an outlet defined on all sides by a moving wall such that an entire perimeter of said passageway is movable, and characterised by said passageway being defined by four identical moving walls.

Certain preferred embodiments of the present invention will now be described in greater detail by way of example only and with reference to the accompanying drawings, in which:
Figure 1 is a sectional schematic view of a dry particulate material pump taken along line 1-1 in Figure 2;
Figure 2 is a top schematic view of the dry particulate material pump;
Figure 3 is a schematic view of a passageway defined by the dry particulate material pump;
Figure 4 is a graphical representation of pressure developed in a dry particulate material pump with two versus four moving walls at different aspect ratios and different L/W ratios;
Figure 5 is a graphical representation of Commercial pump design space and impact on cost of pump;
Figure 6 is a top schematic view of the dry particulate material pump according to one non-limiting embodiment;
Figure 7 is a top schematic view of the dry particulate material pump according to an example, which is not an embodiment of the invention; and
Figure 8 is a top schematic view of the dry particulate material pump according to another non-limiting embodiment.

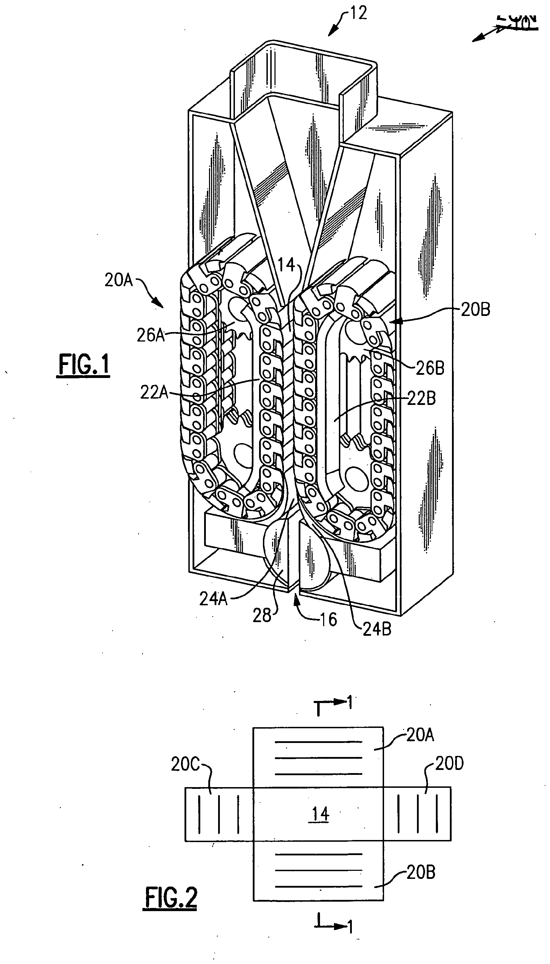

Figures 1 and 2 schematically illustrate a sectional and top view, respectively, of a dry coal extrusion pump 10 for transportation of a dry particulate material such as pulverized dry coal. Although pump 10 is discussed as transporting pulverized dry coal, pump 10 may transport any dry particulate material and may be used in various industries, including, but not limited to the following markets: petrochemical, electrical power, food, and agricultural.

The pump 10 generally includes an inlet 12, a passageway 14 and an outlet 16. The passageway 14 includes a multiple moving wall arrangement in which a moving wall 20A-20D (Figure 2) defines each of four walls. It should be understood that the term "moving wall" as utilized herein operates as a belt to transport dry particulate material and generate work from the interaction between the moving walls 20A-20D and the material therebetween. Each moving wall 20A-20D includes a respective load beam 22A-22D, scraper seal 24A-24D and drive arrangement 26A-26E (only two shown in sectional Figure 1 view).

Pulverized dry coal is introduced into pump at inlet 12, communicated through passageway 14, and expelled from pump 10 at outlet 16. The outlet 16 may be controlled through a rotatable valve 28. The moving walls 20A-20D drive the pulverized dry coal through passageway 14.

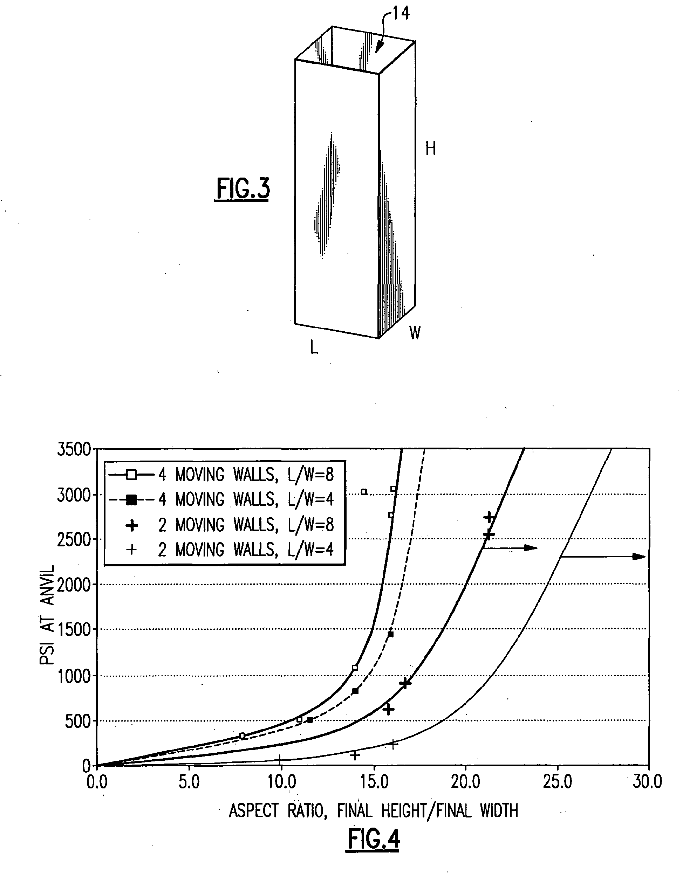

Referring to Figure 3, an Aspect Ratio (AR) of the passageway 14 is defined by Height/Width. As the desired pumping pressure increases, the AR tends to increase. Furthermore, efficiency is generally determined by a Length/Width (L/W) ratio to generally control friction losses.

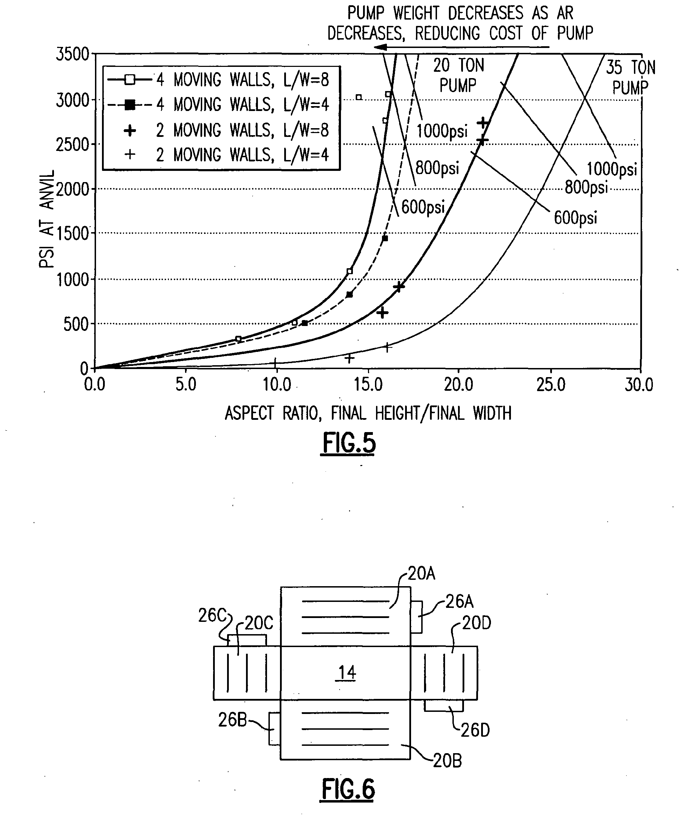

Figure 4 graphically illustrates pressures developed in representative pumps with two versus four moving walls at different ARs and different L/W ratios. Figure 4 graphically illustrates that having four moving walls 20A-20D, facilitates pressure at a given aspect ratio AR that may be 50% larger than a pump with only two moving walls, with constant L/W ratio. When efficiency is taken into account, the pump 10 with four moving walls 20A-20D may have a L/W ratio between 3 and 4 such that the AR can be twice as large for a two moving wall arrangement. These relationships result in a benefit in which, for comparison, a two moving wall pump that weighs approximately 35 tons can be replaced by a four moving wall pump that has equivalent capabilities at a weight of only approximately 20 tons (Figure 5).

Referring to Figure 6, one non-limiting embodiment of the moving walls 20A-20D are each independently driven. That is, each of the four moving walls 20A-20D are essentially equivalent systems driven by a respective drive arrangement 26A-26D.

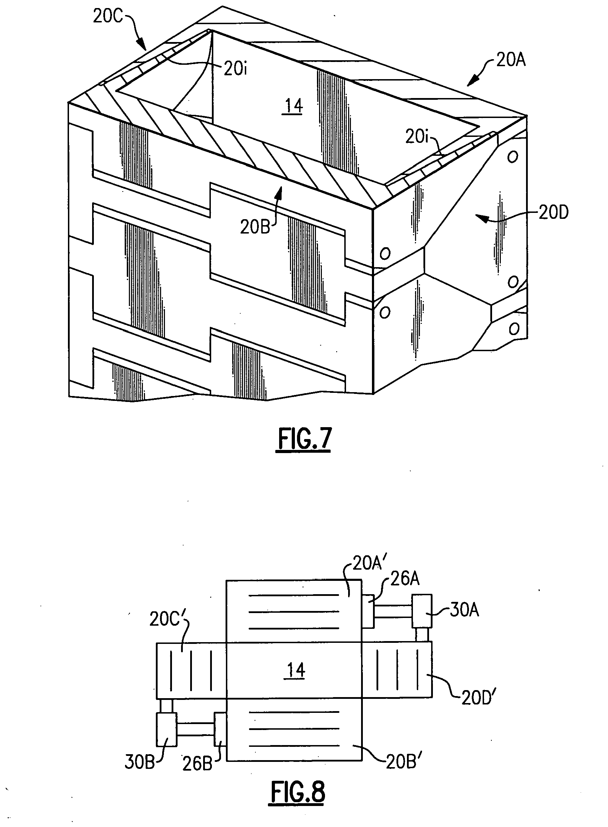

Referring to Figure 7, the moving walls 20A-20D include a three-dimensional arrangement in which the four moving walls 20A-20D are defined by two moving walls 20a, 20b which are generally U-shaped in cross-section. Although illustrated schematically without, for example, bearings and drive sprockets, an interlock 20i between the moving walls 20a, 20b forms the passageway 14.

Referring to Figure 8, another non-limiting embodiment of the moving walls 20A-20D include two driven moving walls 20A', 20B' which respectively drive idler moving walls 20C', 20D'. That is, idler moving walls 20C', 20D' are driven by driven moving walls 20A', 20B' though a gear arrangement 30A, 30B or other power transmission system.

If the angle θ between the two driven moving walls 20A', 20B' is greater than zero, then the Figure 7 embodiment may be preferred over the Figure 8 embodiment as a relatively less complicated interface may be provided. It should be understood that various drive arrangements may alternatively or additionally be provided for the moving walls 20A-20D.

It should be further understood that these arrangements contemplate small sections - such as the corners - which may be stationary, however, all sides of the passageway 14 will primarily be a "moving wall."

It should be understood that relative positional terms such as "forward," "aft," "upper," "lower," "above," "below," and the like are with reference to the normal operational attitude of the vehicle and should not be considered otherwise limiting.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that the disclosure may be practiced other than as specifically described. For that reason the appended claims should be studied to determine scope and content.

## Claims

1. A particulate material pump (10) comprising:
a passageway (14) between an inlet (12) and an outlet (16) defined on all sides by a moving wall (20A-20D; 20A'-20D') such that an entire perimeter of said passageway (14) is movable, and **characterised by** said passageway (14) being defined by four identical moving walls.

2. A particulate material pump as claimed in claim 1, wherein said passageway (14) is defined by two driven moving walls (20A'; 20B') and two idler moving walls (20C'; 20D') driven by said two driven walls.

3. A particulate material pump as claimed in any preceding claim, wherein said passageway (14) defines a L/W Ratio greater than 3.

4. A particulate material pump as claimed in claim 3, wherein said passageway (14) defines a L/W Ratio less than 4.

## Patentansprüche

1. Pumpe (10) für teilchenförmiges Material, umfassend:
einen Durchgang (14) zwischen einem Einlass (12) und einem Auslass (16), der an allen Seiten durch eine bewegliche Wand (20A-20D; 20A'-20D') definiert ist, sodass ein gesamter Umfang des Durchgangs (14) beweglich ist,
und **dadurch gekennzeichnet, dass** der Durchgang (14) durch vier identische bewegliche Wände definiert ist.

2. Pumpe für teilchenförmiges Material nach Anspruch 1, wobei der Durchgang (14) durch zwei angetriebene bewegliche Wände (20A'; 20B') und zwei leerlaufende bewegliche Wände (20C'; 20D'), die durch die zwei angetriebenen Wände angetrieben werden, definiert ist.

3. Pumpe für teilchenförmiges Material nach einem der vorstehenden Ansprüche, wobei der Durchgang (14) ein L/W-Verhältnis größer 3 definiert.

4. Pumpe für teilchenförmiges Material nach Anspruch 3, wobei der Durchgang (14) ein L/W-Verhältnis kleiner 4 definiert.

## Revendications

1. Pompe à matière particulaire (10) comprenant :
un passage (14) entre une entrée (12) et une sortie (16) défini sur tous les côtés par une paroi mobile (20A-20D ; 20A'-20D') de telle sorte qu'un périmètre entier dudit passage (14) est mobile, et **caractérisée par** ledit passage (14) étant défini par quatre parois mobiles identiques.

2. Pompe à matière particulaire selon la revendication 1, dans laquelle ledit passage (14) est défini par deux parois mobiles entraînées (20A' ; 20B') et deux parois mobiles montées libres (20C ; 20D') entraînées par lesdites deux parois entraînées.

3. Pompe à matière particulaire selon l'une quelconque des revendications précédentes, dans laquelle ledit passage (14) définit un rapport L/I supérieur à 3.

4. Pompe à matière particulaire selon la revendication 3, dans laquelle ledit passage (14) définit un rapport L/I inférieur à 4.
